# EUROPEAN PATENT APPLICATION

(11) **EP 4 675 148 A1**
(43) Date of publication of application: **07.01.2026**
(21) Application number: 25184904.8
(22) Date of filing: 24.06.2025
(51) Int. Cl.: F16M 11/06, F16M 11/16

(54) **ROTATING MODULE**

(30) Priority: 04.07.2024 CN 202421580213 U
(71) Applicant: Shenzhen Leqi Innovation Co., Ltd., Shenzhen, Guangdong 518000 (CN)
(72) Inventor: KEMAN, YAN, Shenzhen, 518000 (CN); XINGXING, YUAN, Shenzhen, 518000 (CN); ZHIQIANG, PAN, Shenzhen, 518000 (CN)
(74) Representative: Valet Patent Services Limited

(57) **Abstract**

A rotating module includes a fixing member, a telescopic member, a rotating member and a driving member. The fixing member is provided with a first connecting hole recessed from a first end of the fixing member, and a first locking part arranged at the first end of the fixing member. The telescopic member is partially disposed through the first connecting hole and capable of sliding in the first connecting hole, and its first end penetrates out of the fixing member from the first end of the fixing member. The rotating member is rotatably connected to the first end of the telescopic member and its first end faces the first end of the fixing member and is provided with a second locking part. A first end of the driving member extends into an interior of the fixing member and is rotatably connected with a second end of the telescopic member.

## Description

### TECHNICAL FIELD

The disclosure relates to the field of photographic devices, and in particular to a rotating module.

### BACKGROUND

A rotating module of a photographic device is a commonly used angle adjusting device in a photographic process, which is generally used to connect a bracket and photographic equipment to realize rotation and angle adjustment of a video camera or a camera relative to the bracket during the photographic process.

A rotary locking mechanism for the photographic equipment provided in related art includes a first rotating member and a second rotating member which can be rotated relative to each other, a damping sheet (friction plate) is provided between the two rotating members, and meanwhile the rotary locking mechanism is further provided with a thrust device. When an angle of the photographic equipment needs to be adjusted, a user pushes the thrust device by hand to drive the first rotating member and the second rotating member away from the damping sheet, then the first rotating member and the second rotating member can be rotated relative to each other to adjust the angle of the photographic equipment. When the user fixes the angle and releases the thrust device, the first rotating member and the second rotating member simultaneously press the damping sheet between them, and by pressing the damping sheet, rotating friction of them relative to the damping sheet is increased, so that the first rotating member and the second rotating member are relatively fixed and thus the photographic equipment is fixed.

The above rotary locking mechanism for adjusting the angle of the photographic equipment still has following shortcomings in specific applications: when the fixing is made in a friction manner, the user needs to spend a certain amount of power to drive the thrust device to press or release the damping sheet in adjusting the angle so as to fix or unlock the two rotating members, resulting in insufficient labor-saving operations when adjusting the angle of the photographic equipment.

### SUMMARY

A main object of the disclosure is to provide a rotating module, aiming at providing a rotating module for adjusting an angle of photographic equipment conveniently and with less effort.

In order to achieve the above object, a rotating module is provided in the present disclosure, which includes:
a fixing member, provided with a first connecting hole and a first locking part, the first locking part being arranged at a first end of the fixing member and the first connecting hole being recessed from the first end of the fixing member;
a telescopic member, which is partially disposed through the first connecting hole and is capable of sliding in the first connecting hole and a first end of which penetrates out of the fixing member from the first end of the fixing member;
a rotating member which is rotatably connected to the first end of the telescopic member and a first end of which is provided with a second locking part and faces the first end of the fixing member, the second locking part being configured to prevent the rotating member from rotating relative to the fixing member when abutted against and cooperated with the first locking part and to allow the rotating member to rotate relative to the fixing member when separated from the first locking part; and
a driving member, a first end of which extends into an interior of the fixing member and is rotatably connected with a second end of the telescopic member, for driving the telescopic member to drive the rotating member to move toward the fixing member so that the second locking part is abutted against and cooperated with the first locking part, and for driving the telescopic member to drive the rotating member to move away from the fixing member so that the second locking part is separated from the first locking part.

In some embodiments, the fixing member includes a first connecting component and a second connecting component, and the first connecting component and the second connecting component are detachably connected with each other.

The first connecting component is defined with an accommodating groove, the second end of the telescopic member extends into the accommodating groove, the first connecting hole is a hole with at least one inner side wall being a plane, and the fixing member is further provided with a lateral opening, and the lateral opening extends from an outer side of the fixing member to be communicated with the accommodating groove.

The second connecting component includes a first face and a second face which are opposite to each other. The first face is covered on an opening of the accommodating groove, the second face is provided with the first locking part, the first connecting hole penetrates through the first face and the second face, and the first connecting hole is communicated with the accommodating groove.

In some embodiments, the first end of the driving member is provided with a rotary connection part, and a second end of the driving member is provided with a handle part. The rotary connection part of the driving member is accommodated in the accommodating groove and rotatably connected with the second end of the telescopic member. The handle part is inserted outside the lateral opening, and the handle part is configured to drive the driving member to swing under an action of an external force, so as to drive the telescopic member to drive the rotating member to move away from the fixing member.

In some embodiments, the driving member further includes a cam part. The cam part connects the handle part and the rotary connection part, the cam part has a first end and a second end, and the cam part extends from the first end to the second end with a tendency that a distance between the cam part and the second face of the second connecting component gradually increases.

In some embodiments, the rotating module further includes:
a reset component provided in the fixing member and configured to drive the driving member to reset after an external force applied to the driving member is removed, so that the telescopic member drives the rotating member to move towards the fixing member to reset.

In some embodiments, the reset component includes an elastic piece, and the driving member further includes an abutting part. The rotary connection part is located between the abutting part and the handle part, the abutting part is located in the accommodating groove, the elastic piece is mounted in the fixing member and located between the driving member and the rotating member, and the elastic piece is configured to drive the abutting part to move away from the rotating member after the external force on the handle part is removed, so as to swing and reset the driving member.

In some embodiments, the fixing member includes a mounting part, the mounting part is arranged on a side of the second connecting component facing the first connecting component, and the mounting part is defined with a mounting groove along a defining direction of the first connecting hole. A through hole communicated with the mounting groove is defined in a peripheral wall of the mounting part, the elastic piece is accommodated in the mounting groove, with one end of the elastic piece being abutted against a bottom wall of the mounting groove and the abutting part extending into the mounting groove through the through hole to be abutted against the other end of the elastic piece.

In some embodiments, the reset component includes a magnetic piece, and the magnetic piece is mounted in the second connecting component, and the magnetic piece is configured to adsorb a part of the driving member located between the handle part and the rotary connection part after an external force on the driving member is removed, so as to swing and reset the driving member.

In some embodiments, the first locking part is a first gear plate, the second locking part is a second gear plate, and the first gear plate is faced to and engageable with the second gear plate.

In some embodiments, the rotating member is defined with a second connecting hole, and the first end of the telescopic member extends into the second connecting hole.

The first locking part is arranged along a circumferential side of the first connecting hole, and the second locking part is arranged along a circumferential side of the second connecting hole.

For the rotating module provided in the present disclosure, the driving member is arranged to drive the telescopic member to move, and in combination with abutment and separation of the first locking part and the second locking part, locking and unlocking of the rotating member relative to the fixing member 1 can be realized, and the two members can be relatively fixed or an angle between them can be adjusted. When the rotating module is applied to a photographic auxiliary supporting device, angle adjustment of photographic equipment connected to the rotating module can be realized, and convenience of an angle adjustment operation of the photographic equipment is improved.

### BRIEF DESCRIPTION OF THE DRAWINGS

FIG. 1 is a schematic structural view of a rotating module according to an embodiment of the disclosure;
FIG. 2 is a schematic structural view of the rotating module in FIG. 1 from another perspective;
FIG. 3 is a sectional view taken at A-A in FIG. 2;
FIG. 4 is an exploded view of a rotating module according to an embodiment of the disclosure;
FIG. 5 is a schematic structural view of a second rotary arm of a rotating module according to an embodiment of the disclosure;
FIG. 6 is a schematic structural view of a partial structure of a rotating module according to an embodiment of the disclosure; and
FIG. 7 is a schematic structural view of a partial structure of a rotating module according to another embodiment of the disclosure.

Realization of the object, functional characteristics and advantages of the disclosure will be further explained in combination with embodiments and with reference to attached figures.

### DETAILED DESCRIPTION OF THE EMBODIMENTS

In the following, schemes in the embodiments of the disclosure will be described clearly and completely in connection with the drawings; obviously, the described embodiments are intended to be only a part of embodiments of the disclosure, but not all of them. On a basis of the embodiments in this disclosure, all other embodiments obtained by the ordinary skilled in the art without any creative effort fall within the protection scope of this disclosure.

It should be noted that all of directional indications (such as up, down, left, right, front, back, etc.) in embodiments of the disclosure are only used to illustrate relative position relationships and movement conditions among respective components in a certain posture (as shown). If the certain posture changes, the directional indications vary accordingly.

It should also be noted that when an element is referred to be "fixed" or "provided" on another element, it may be directly on the another element or an intervening element may exist at the same time. When an element is referred to be "connected" to another element, it may be directly connected to the another element or an intervening element may exist at the same time.

In addition, descriptions involving "first", "second" or the like in this disclosure are only intended for descriptive purposes, and cannot be understood as indicating or implying a relative importance, or implicitly indicating a number of indicated technical features. Therefore, the features defined with "first" and "second" can explicitly or implicitly include at least one of these features. In addition, technical schemes of respective embodiments can be combined with each other, which must be based on enabling of realization by an ordinary skilled in the art. When combination of technical schemes is contradictory or impossible to be realized, it should be considered that such combination of technical schemes does not exist and either is not within the protection scope claimed in this disclosure.

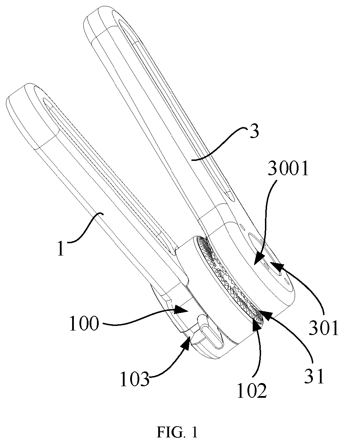

Referring to FIGS. 1 to 3, a rotating module is provided in the disclosure, which includes:
a fixing member 1, provided with a first connecting hole 101 and a first locking part 102, the first locking part 102 being arranged at a first end 100 of the fixing member 1 and the first connecting hole 101 being recessed from the first end 100 of the fixing member 1;
a telescopic member 2 which is partially disposed through the first connecting hole 101 and is capable of sliding in the first connecting hole 101, and a first end of which penetrates out of the fixing member 1 from the first end 100 of the fixing member 1;
a rotating member 3 which is rotatably connected to the first end 21 of the telescopic member 2 and a first end of which is provided with a second locking part 31 and faces the first end 100 of the fixing member 1, the second locking part 31 being configured to prevent the rotating member 3 from rotating relative to the fixing member 1 when abutted against and cooperated with the first locking part 102 and to allow the rotating member 3 to rotate relative to the fixing member 1 when separated from the first locking part 102; and
a driving member 4, a first end 401 of which extends into an interior of the fixing member 1 and is rotatably connected with a second end 22 of the telescopic member 2, for driving the telescopic member 2 to drive the rotating member 3 to move toward the fixing member 1 so that the second locking part 31 is abutted against and cooperated with the first locking part 102, and for driving the telescopic member 2 to drive the rotating member 3 to move away from the fixing member 1 so that the second locking part 31 is separated from the first locking part 102.

In this embodiment, the fixing member 1 is provided with the first connecting hole 101 and the first locking part 102, the first connecting hole 101 is configured to accommodate the telescopic member 2 and guide the telescopic member 2 to slide, and the first locking part 102 is configured to be cooperated with the second locking part 31 on the rotating member 3 to control a rotating state of the rotating member 3.

The first end 21 of the telescopic member 2 passes through the first connecting hole 101 of the fixing member 1 and extends outside of the fixing member 1, and the other end of the telescopic member is connected with the driving member 4, so that the telescopic member 2 can slide in the first connecting hole 101.

The rotating member 3 is rotatably connected to the first end 21 of the telescopic member 2, and is provided with the second locking part 31. When the second locking part 31 is abutted against and cooperated with the first locking part 102 of the fixing member 1, the rotating member 3 is locked and cannot be rotated relative to the fixing member 1. When the second locking part 31 is separated from the first locking part 102, the rotating member 3 can be rotated freely.

The first end 401 of the driving member 4 extends into the fixing member 1 and is rotatably connected with the second end 22 of the telescopic member 2. When in use, the driving member 4 can be swung through an end of the driving member 4 locate at the fixing member 1, thereby driving the telescopic member 2 to move horizontally along a defining direction of the first connecting hole 102, and further driving the rotating member 3 to move.

During use of the rotating module proposed in a scheme of this disclosure, the fixing member 1 and the rotating member 3 can be connected to two different photographic equipment respectively. For example, when using the rotating module of this disclosure, the user can connect the fixing member 1 to a tripod and other brackets, and connect the rotating member 3 to the photographic equipment. In the scheme of the disclosure, an operation principle of the rotating module is illustrated by taking an initial state being a state in which the rotating member 3 cannot be rotated relative to the fixing member 1 as an example.

Initial locking state: the telescopic member 2 is in a retracted state, and the second locking part 31 on the rotating member 3 is in contact with the first locking part 102 of the fixing member 1. The rotating member 3 is fixed and cannot be rotated relative to the fixing member 1, and an angle of the photographic equipment relative to the bracket cannot be adjusted.

Unlocking state: when it is necessary to adjust the angle of the photographic equipment relative to the bracket, the second end 402 of the driving member 4 located outside the fixing member 1 can be driven by an external force to swing the driving member 4, so as to drive the telescopic member 2 connected with the driving member 4 to move in the first connecting hole 101 in a direction away from the fixing member 1 until the second locking part 31 is separated from the first locking part 102, then the rotating member 3 is unlocked and can be rotated relative to the fixing member 1, and the user can adjust the angle of the photographic equipment relative to the bracket at this time.

Re-locking state: after the photographic equipment is adjusted to an appropriate angle, a force can be applied in a direction opposite to a direction of the external force driving the driving member 4 to swing, so that the driving member 4 swings and drives the telescopic member 2 to move in a direction toward the fixing member 1, so that the second locking part 31 is abutted against and cooperated with the first locking part 102. At this time, the rotating member 3 is locked again, and adjustment of the angle of the photographic equipment relative to the bracket is completed.

For the rotating module provided in this disclosure, the driving member 4 is arranged to drive the telescopic member 2 to move, and in combination with abutment and separation of the first locking part 102 and the second locking part 31, locking and unlocking of the rotating member 3 relative to the fixing member 1 can be realized, and the two members can be relatively fixed or an angle between them can be adjusted, thus realizing angle adjustment between the photographic equipment connected to the two members, and improving an angle adjustment operation of the photographic equipment with less effort.

In some embodiments, in addition to directly connecting the photographic equipment to the fixing member 1 and the rotating member 3 in the scheme of the disclosure, a connecting arm or a similar structure can be provided on the fixing member 1 and/or the rotating member 3, and the photographic equipment can also be connected through the connecting arm.

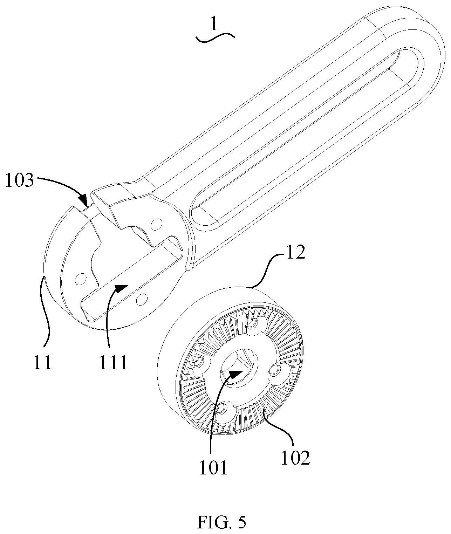

Referring to FIGS. 1 to 5, in some embodiments, the fixing member 1 proposed in the embodiment of this disclosure includes a first connecting component 11 and a second connecting component 12, and the first connecting component 11 and the second connecting component 12 are detachably connected with each other.

The first connecting component 11 is defined with an accommodating groove 111, the second end 22 of the telescopic member 2 extends into the accommodating groove 111, the first connecting hole 101 is a hole with at least one inner side wall being a plane, and the fixing member 1 is further provided with a lateral opening 103, and the lateral opening 103 extends from an outer side of the fixing member 1 to be communicated with the accommodating groove 111.

The second connecting component 12 includes a first face 121 and a second face 122 which are opposite to each other. The first face 121 is covered on an opening of the accommodating groove 111, the second face 122 is provided with the first locking part 102, the first connecting hole 101 penetrates through the first face 121 and the second face 122, and the first connecting hole 101 is communicated with the accommodating groove 111.

In this embodiment, the first connecting component 11 is defined with the accommodating groove 111 and the lateral opening 103, and the lateral opening 103 is communicated with the accommodating groove 111. The second connecting component 12 includes the first face 121 and the second face 122 which are opposite to each other. The first face 121 is covered on the opening of the accommodating groove 111, and the second face 122 is provided with the first locking part 102. The first connecting hole 101 penetrates through the first face 121 and the second face 122 which are opposite to each other and is communicated with the accommodating groove 111.

In this disclosure, following effects can be achieved by providing the fixing member 1 composed of the first connecting component 11 and the second connecting component 12 which are detachable.

First, it is convenient for maintenance and replacement. The detachable connection structure enables the telescopic member and a toggle component to be disassembled and replaced easily and conveniently, which brings great convenience to maintenance and service.

Second, it is with flexibility and adjustability. The detachable design allows users to adjust and replace parts as needed, which increases flexibility and adjustability of the system and is more adaptable.

Third, it can simplify a mounting process. Due to the detachable connection design, it becomes simpler and faster to mount and disassemble the telescopic member 2 and the driving member 4, saving time and labor costs.

Fourth, it can ensure a stable connection. Design of the first locking part 102 and the first connecting hole 101 ensures firmness and stability of connection, so that the telescopic member and the toggle component can be firmly connected, and a risk of accidental loosening can be reduced.

In some embodiments, with a matching hole structure being provided on the two connecting components, the two connecting components can be fixed by connecting screws.

Referring to FIGS. 1 to 6, in some embodiments, the first end 401 of the driving member 4 is provided with a rotary connection part 41, and a second end 402 of the driving member 4 is provided with a handle part 42. The rotary connection part 41 of the driving member 4 is accommodated in the accommodating groove 111 and rotatably connected with the second end 22 of the telescopic member 2. The handle part 42 is inserted outside the lateral opening 103, and the handle part 42 is configured to drive the driving member 4 to swing under an action of an external force, so as to drive the telescopic member 2 to drive the rotating member 3 to move away from the fixing member 1.

In this embodiment, the first end 401 of the driving member 4 is provided with the rotary connection part 41, and the second end is provided with the handle part 42.

The rotary connection part 41 is inserted in the fixing member 1 and is rotatably connected with the second end 22 of the telescopic member 2.

The handle part 42 is inserted outside the fixing member 1 through the lateral opening 103, and the user can drive the driving member 4 in this embodiment to swing by applying an external force, thus driving the telescopic member 2 to move.

The first connecting hole 101 is a hole with at least one inner side wall being a plane. A part where the telescopic member 2 is slidably connected with the first connecting hole 101 is also set as a plane corresponding to the inner side wall set as the plane. A structure of the first connecting hole 101 designed in this way provides a relatively flat connecting surface, which facilitates connection with the telescopic member 2 and ensures stability and accuracy of the connection.

The lateral opening 103 extends from an outer side part of the fixing member 1 to inside of the fixing member 1 and is communicated with the first connecting hole 101. With communication of the lateral opening 103 with the first connecting hole 101, it can be realized that the rotary connection part 41 of the driving member 4 can extend into the fixing member 1 through the lateral opening 103 to be connected with the second end 22 of the telescopic member 2.

Taking an initial state being a state in which the fixing member 1 and the rotating member 3 are locked as an example, an operation principle of the driving member 4 in the scheme of the disclosure is illustrated as follows.

Initial state: the telescopic member 2 is in the retracted state, and the second locking part 31 on the rotating member 3 is abutted against and cooperated with the first locking part 102 of the fixing member 1, so that the rotating member 3 is locked and cannot be rotated relative to the fixing member 1. At this time, the driving member 4 is at an initial position.

Unlocking operation: when it is necessary to unlock the rotating member 3, the user can apply an external force to the handle part 42 of the driving member 4, so that the driving member 4 swings relative to the telescopic member 2, and the telescopic member 2 can be driven to move away from the fixing member 1 through the rotary connection part 41. Movement of the telescopic member 2 separates the second locking part 31 on the rotating member 3 from the first locking part 102 of the fix member 1, and then the rotating member 3 can be rotated freely.

By arranging the rotating module with the above structure, the disclosure realizes following effects: unlocking and locking operations are realized by simple swinging of the driving member 4, which simplifies operation steps of users and saves labor in adjustment.

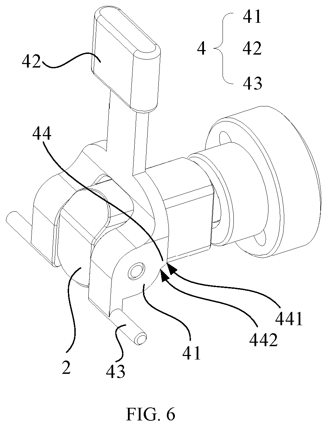

Referring to FIG. 6, in some embodiments, the driving member 4 proposed in the embodiment of this disclosure further includes a cam part 44. The cam part 44 connects the handle part 41 and the rotary connection part 42, the cam part 44 has a first end 441 and a second end 442, the first end is configured to be abutted against or move away from the second face 122 of the second connecting part 12 when the handle part 41 is driven by the external force, and the cam part 44 extends from the first end to the second end with a tendency that a distance between the cam part 44 and the second face 122 of the second connecting component 12 gradually increases.

In this embodiment, in a state in which the first locking part 102 and the second locking part 31 are locked with each other, the first end of the cam part 44 is abutted against the second face 122 of the second connecting component. When the angle of the photographic equipment needs to be adjusted, the driving member 4 can be driven by an external force to gradually rotate the second end 442 toward the second face 122 of the second connecting component 12. When the second end 442 is rotated facing the second face 122 of the second connecting component 12, a distance between the second end 442and the second face 122 of the second connecting component 12 is larger than a distance between the first end 441 and the second face 122. At this time, there is a moving gap between the first locking part 102 and the second locking part 31 which is equal to difference between the two distances, that is, the two locking parts are not abutted against and cooperated with each other at this time, and they can be rotated relative to each other, and the user can directly drive the two locking parts to rotate to realize the angle adjustment of the photographic equipment.

In some embodiments, a scheme of providing the cam part 44 and a scheme in which the driving member 4 directly drives the telescopic member 2 to drive the rotating member 3 can be implemented simultaneously or alternatively.

Referring to FIGS. 1 to 5, in some embodiments, the rotating module proposed in the embodiment of the disclosure further includes:
a reset component 5 provided in the fixing member 1 and configured to drive the driving member 4 to reset after an external force applied to the driving member 4 is removed, so that the telescopic member 2 drives the rotating member 3 to move toward the fixing member 1 to reset.

In this embodiment, the reset component 5 is arranged on the fixing member 1. When the external force applied by the user is removed, the reset component 5 can drive the driving member 4 to reset, so that the telescopic member 2 and the rotating member 3 can be returned to the initial position.

Taking an initial state being a state in which the fixing member 1 and the rotating member 3 are locked as an example, an operation principle of the driving member 4 in the scheme of the disclosure is illustrated as follows.

Initial state: the telescopic member 2 is in the retracted state, and the second locking part 31 on the rotating member 3 is abutted against and cooperated with the first locking part 102 of the fixing member 1, so that the rotating member 3 is locked and cannot be rotated relative to the fixing member 1. At this time, the driving member 4 is at an initial position.

Unlocking operation: when it is necessary to unlock the rotating member 3, the user can apply an external force to the handle part 42 of the driving member 4, so that the driving member 4 swings relative to the telescopic member 2, and the telescopic member 2 can be driven to move away from the fixing member 1 through the rotary connection part 41. Movement of the telescopic member 2 separates the second locking part 31 on the rotating member 3 from the first locking part 102 of the fix member 1, then the rotating member 3 can be rotated freely.

Resetting to a locking state: when it is necessary to lock the rotating member 3 again, the user removes the external force on the handle part 42, and the reset component 5 acts on the driving member 4 to reset the driving member 4. Resetting of the driving member 4 drives the telescopic member 2 to move toward the fixing member 1, so that the second locking part 31 on the rotating member 3 is abutted against and cooperated with the first locking part 102 again, and the rotating member 3 is locked.

By arranging the reset assembly with the above structure, the disclosure achieves following effects.

When the external force stops driving the driving member 4 to unlock, the rotating module in the disclosure can automatically reset to the locking state, which ensures safety and stability of the equipment, with no manual resetting, and is convenient to operate.

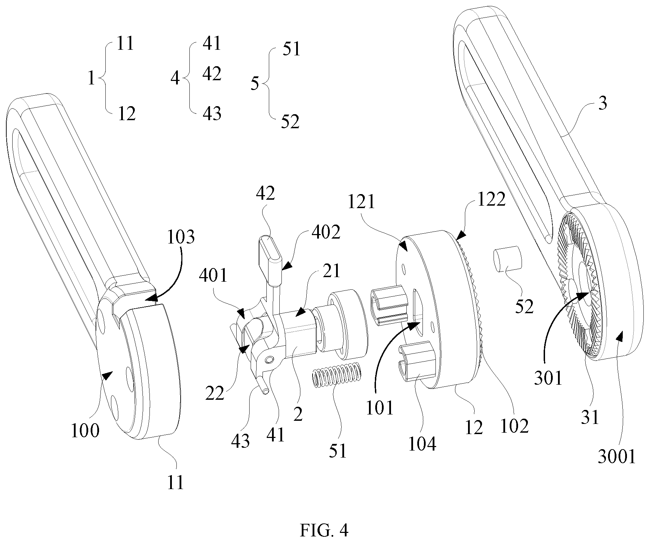

With continued reference to FIGS. 4 to 6, in some embodiments, the reset component 5 proposed in the embodiment of this disclosure includes an elastic piece 51, and the driving member 4 further includes an abutting part 43. The rotary connection part 41 is located between the abutting part 43 and the handle part 42, the elastic piece 51 is mounted in the fixing member 1 and located between the driving member 4 and the rotating member 3, and the elastic piece 51 is configured to drive the abutting part 43 to move away from the rotating member 3 after the external force on the handle part 42 is removed, so as to swing and reset the driving member 4.

In this embodiment, the elastic piece 51 in the reset component 5 is mounted in the fixing member 1 and is located between the driving member 4 and the rotating member 3. The elastic piece 51 acts to drive the abutting part 43 to move in a direction away from the rotating member 3 after the external force exerted by the user or an external driving mechanism is removed, so as to swing and reset the driving member 4 to the locking state.

Taking the driving member 4 under an action of an external force as an example, an operation principle of the elastic piece 51 of the reset component 5 in the embodiment of this disclosure is illustrated.

When the external force applied to the handle part 42 of the driving member 4 by the user or the external driving mechanism is removed, the driving member 4 is in a state that needs to be reset.

The driving member 4 starts to be reset: after the external force applied to the handle part 42 indirectly through the elastic piece 51 is removed, the elastic piece 51 releases energy stored by compression and drives the abutting part 43 to move away from the rotating member 3.

Movement of the abutting part 43 drives the driving member 4 to slide in the first connecting hole 101, so as to move the telescopic member 2 toward the fixing member 1 and lock the rotating member 3.

During swinging of the driving member 4, the telescopic member 2 slides to a position to lock the rotating member 3, and at this time, the first locking part 102 and the second locking part 31 are abutted against each other, thus completing an automatic resetting operation of the driving member 4 and locking the rotating member 3 again.

By arranging the reset component 5 with the above structure, the disclosure achieves following effects.

First, automatic resetting and locking can be achieved. Arrangement of the elastic piece 51 enables the reset component 5 to have a function of automatically resetting the driving member 4, namely, automatically resetting the driving member 4 after the external force disappears, so as to restore the fixing member 1 and the rotating member 3 to the initial locking state, thus improving automation and convenience in operation of the whole system.

Second, service life of components can be extended. The elastic piece 51 acts to reduce direct action of the external force on the driving member 4, which can effectively reduce wearing of the toggle component and prolong the service life of the components.

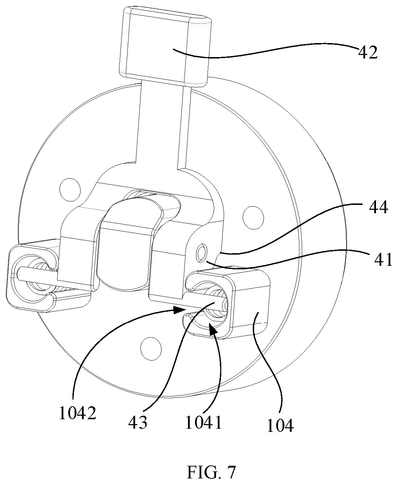

With continued reference to FIGS. 4 and 7, in some embodiments, the fixing member 1 includes a mounting part 104, and the mounting part 104 is arranged on a side of the second connecting component 12 facing the first connecting component 11, and the mounting part 104 is defined with an mounting groove 1041 along a defining direction of the first connecting hole 101. A through hole 1042 communicated with the mounting groove 1041 is defined in a peripheral wall of the mounting part 104, the elastic piece 51 is accommodated in the mounting groove 1041, with one end of the elastic piece 51 being abutted against a bottom wall of the mounting groove 1041 and the abutting part 43 extending into the mounting groove 1041 through the through hole 1042 to be abutted against the other end of the elastic piece 51.

In this embodiment, the mounting part 104 is configured to mount the elastic piece 51 and ensure its accurate positioning and operation in the mounting groove 1041.

With design of the mounting groove 1041 and the through hole 1042, the mounting part 104 ensures that the elastic piece 51 is firmly accommodated in the fixing member 1 and its correct position and operating state are maintained.

The elastic piece 51 is accommodated in the mounting groove 1041, with one end being abutted against the bottom wall of the mounting groove 1041, so as to ensure that the elastic piece 51 can be stably limited and mounted in the fixing member 1.

The abutting part 43 extends into the mounting groove 1041 through the through hole 1042 defined in the peripheral wall of the mounting part 104 and is abutted against the other end of the elastic piece 51 to ensure support and connection of the elastic piece to the abutting part 43.

When the external force applied to the driving member 4 is removed, the elastic piece 51 releases energy, and the abutting part 43 can move in a releasing direction of the elastic piece 51 in the through hole 1042, thus realizing automatic resetting of the driving member 4.

Through an above action process, design of the mounting part 104 can effectively fix and connect the elastic piece 51 with the abutting part 43, ensuring normal operations of the elastic piece 51 and the abutting part 43 in the system and improving stability and reliability of the system.

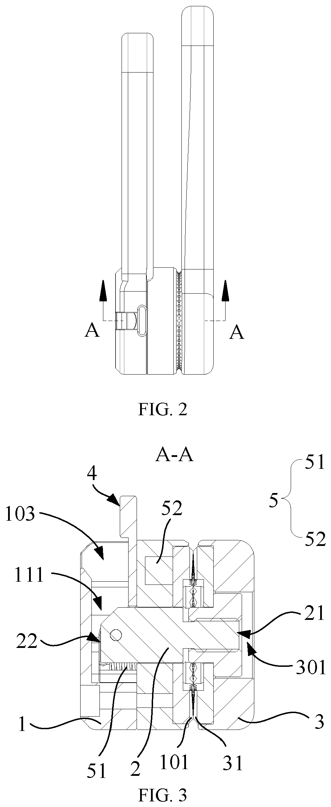

With continued reference to FIGS. 3 and 4, in some embodiments, the reset component 5 includes a magnetic piece 52, the magnetic piece 52 is mounted in the second connecting component 12, and the magnetic piece 52 is configured to adsorb a part of the driving member 4 located between the handle part 42 and the rotary connection part 41 after an external force on the driving member 4 is removed, so as to swing and reset the driving member 4.

In this embodiment, the magnetic piece 52 is mounted in the fixing member 1 and located between the driving member 4 and the rotating member 3. This acts to adsorb a specific part of the driving member 4 by magnetic attraction of the magnetic piece after the external force applied to the handle part 42 of the driving member 4 is removed, facilitating swinging and resetting of the driving member 4.

When the external force applied to the handle part 42 is removed, the handle part 42 is free to move without being affected by the external force, and the magnetic piece 52 begins to function.

Magnetic attraction: the magnetic piece 52 continuously generates a magnetic field to absorb a specific part of the driving member 4 located between the handle part 42 and the rotary connection part 41.

Due to adsorption of the magnetic piece 52, the driving member 4 is forced and starts to swing, which drives the telescopic member 2 to slide and makes the rotating member 3 unable to be rotated relative to the fixing member 1. As such, a resetting action of the driving member 4 is completed.

In this disclosure, the magnetic piece 52 is used as a part of the reset component 5, which can bring following effects.

Precise resetting: the magnetic piece 52 can firmly absorb the specific part of the driving member 4, ensuring that the driving member 4 swings to a locking position accurately and realizing a precise reset operation.

Automatic operation: the magnetic piece 52 acts to make the resetting process more automatic and stable, reduces a need for manual intervention, and improves reliability and operating efficiency of the system.

Enhanced stability: the magnetic piece 52 provides additional stability through the magnetic attraction, ensuring good control and stability of the driving member 4 during resetting.

To sum up, the magnetic part 52, as a part of the reset component 5, realizes precise resetting of the driving member 4 through the magnetic attraction, which enhances the stability and automation of the system.

In some embodiments, the magnetic piece 52 and the elastic piece 51 described in previous embodiments can be either provided on the rotating module of the present disclosure or both provided on the rotating module of the present disclosure, which can be set by those skilled in the art as required.

With continued reference to FIG. 3, in some embodiments, the first locking part 102 is a first gear plate, the second locking part 31 is a second gear plate, and the first gear plate is faced to and engageable with the second gear plate.

In this embodiment, the first gear plate and the second gear plate are respectively arranged at the ends of the fixing member 1 and the rotating member 3, and each has a gear surface, and these gear surfaces can be engaged with each other. Through engaging connection of the first gear plate and the second gear plate, locking and unlocking operations of the rotating member 3 can be realized, ensuring that the rotating member 3 stops at a specific position or can be rotated relative to the fixing member 1.

An operation process of the first gear plate and the second gear plate in this embodiment is illustrated as follows, by way of an operation principle of the driving member 4 as described in the previous embodiments.

In the locking state, the gear surfaces of the first gear plate and the second gear plate are engaged and connected with each other, and the fixing member 1 and the rotating member 3 are locked at a specific position and are fixed relative to each other.

In unlocking, after a series of unlocking steps such as driving the telescopic rod 2 by the driving member 4 as described in the previous embodiments, the first gear plate and the second gear plate are separated from each other and are no longer engaged and connected with each other, and thus the rotating member 3 can be rotated relative to the fixing member 1.

By arranging the first locking part 102 and the second locking part 31 with the above structure, the present disclosure achieves following effects.

First, meshing connection between the first gear plate and the second gear plate provides a very stable locking effect, preventing accidental rotation of the rotating member 3.

Second, the meshing connection between the first gear plate and the second gear plate makes the rotating member 3 more stable in the locking state, and reduces swinging or instability when the system is operated.

To sum up, the first gear plate and the second gear plate provide a reliable locking effect through their meshing connection, so that the rotating member can be locked at the required position precisely and stably, achieving an improved system controllability and stability.

With continued reference to FIGS. 1, 3, and 4, in some embodiments, the rotating member 3 is defined with a second connecting hole 301, and the first end 21 of the telescopic member 2 extends into the second connecting hole 301.

The first locking part 102 is arranged along a circumferential side of the first connecting hole 101, and the second locking part 31 is arranged along a circumferential side of the second connecting hole 301.

In this embodiment, the second connecting hole 301 serves as a connecting interface on the rotating member 3 for rotating connection with the telescopic member 2. The telescopic member 2 penetrates out of one end of the fixing member 1, and is rotatably connected with the second connecting hole 301 through a rotatable element such as a bearing, thereby realizing rotational connection between the fixing member 1 and the rotating member 3.

In some embodiments, the telescopic member 2 may be a split structure design including a main rod body and a bearing, or may be only designed with the main rod body, and an end of the main rod body penetrated out of the fixing member 1 is sleeved with the bearing arranged in the second connecting hole 301, so as to realize the rotational connection between the fixing member 1 and the rotating member 3.

The above is only a part or preferred embodiments of the disclosure, and neither the text nor the figures can serve to limit the protection scope of the disclosure. Any equivalent structural transformation made under a concept integral with the disclosure using the specification and drawings of the present disclosure, which is directly or indirectly applied to other related technical fields, is included within the protection scope of the disclosure.

## Claims

1. A rotating module, comprising:
a fixing member, provided with a first connecting hole and a first locking part, the first locking part being arranged at a first end of the fixing member and the first connecting hole being recessed from the first end of the fixing member;
a telescopic member, being partially disposed through the first connecting hole and being capable of sliding in the first connecting hole, and a first end of the telescopic member penetrating out of the fixing member from the first end of the fixing member;
a rotating member, rotatably connected to the first end of the telescopic member, a first end of the rotating member being provided with a second locking part and facing the first end of the fixing member, the second locking part being configured to prevent the rotating member from rotating relative to the fixing member when abutted against and cooperated with the first locking part and to allow the rotating member to rotate relative to the fixing member when separated from the first locking part; and
a driving member, a first end of the driving member extending into an interior of the fixing member and being rotatably connected with a second end of the telescopic member, for driving the telescopic member to drive the rotating member to move toward the fixing member so that the second locking part is abutted against and cooperated with the first locking part, and for driving the telescopic member to drive the rotating member to move away from the fixing member so that the second locking part is separated from the first locking part.

2. The rotating module according to claim 1, wherein the fixing member comprises a first connecting component and a second connecting component detachably connected with each other, wherein
the first connecting component is defined with an accommodating groove, the second end of the telescopic member extends into the accommodating groove, the first connecting hole is a hole with at least one inner side wall being a plane, and the fixing member is further provided with a lateral opening, and the lateral opening extends from an outer side of the fixing member to be communicated with the accommodating groove; and
the second connecting component comprises a first face and a second face which are opposite to each other, the first face is covered on an opening of the accommodating groove and the second face is provided with the first locking part, the first connecting hole penetrates through the first face and the second face, and the first connecting hole is communicated with the accommodating groove.

3. The rotating module according to claim 2, wherein the first end of the driving member is provided with a rotary connection part, and a second end of the driving member is provided with a handle part, the rotary connection part of the driving member is accommodated in the accommodating groove and rotatably connected with the second end of the telescopic member, and the handle part is inserted outside the lateral opening and configured to drive the driving member to swing under an action of an external force, so as to drive the telescopic member to drive the rotating member to move away from the fixing member.

4. The rotating module according to claim 3, wherein the driving member further comprises a cam part, the cam part connecting the handle part and the rotary connection part, the cam part having a first end and a second end, and the cam part extending from the first end to the second end with a tendency that a distance between the cam part and the second face of the second connecting component gradually increases.

5. The rotating module according to claim 3, further comprising:
a reset component provided in the fixing member and configured to drive the driving member to reset after an external force applied to the driving member is removed, to allow the telescopic member driving the rotating member to move towards the fixing member to reset.

6. The rotating module according to claim 5, wherein the reset component comprises an elastic piece, the driving member further comprises an abutting part, the rotary connection part is located between the abutting part and the handle part, the abutting part is located in the accommodating groove, the elastic piece is mounted in the fixing member and located between the driving member and the rotating member, and the elastic piece is configured to drive the abutting part to move away from the rotating member after the external force on the handle part is removed, so as to swing and reset the driving member.

7. The rotating module according to claim 6, wherein the fixing member comprises a mounting part arranged on a side of the second connecting component facing the first connecting component, and the mounting part being defined with a mounting groove along a defining direction of the first connecting hole; a through hole communicated with the mounting groove is defined in a peripheral wall of the mounting part, the elastic piece is accommodated in the mounting groove, with one end of the elastic piece being abutted against a bottom wall of the mounting groove and the abutting part extending into the mounting groove through the through hole to be abutted against the other end of the elastic piece.

8. The rotating module according to any one of claims 5 to 7, wherein the reset component comprises a magnetic piece mounted in the second connecting component, and the magnetic piece is configured to adsorb a part of the driving member located between the handle part and the rotary connection part after an external force on the driving member is removed, so as to swing and reset the driving member.

9. The rotating module according to claim 1, wherein the first locking part is a first gear plate, the second locking part is a second gear plate, and the first gear plate is faced to and engageable with the second gear plate.

10. The rotating module according to claim 1 or 9, wherein the rotating member is defined with a second connecting hole, and the first end of the telescopic member extends into the second connecting hole; and
the first locking part is arranged along a circumferential side of the first connecting hole, and the second locking part is arranged along a circumferential side of the second connecting hole.
